# EUROPEAN PATENT SPECIFICATION

(11) **EP 2 618 908 B1**
(45) Date of publication and mention of the grant of the patent: **20.01.2016**
(21) Application number: 11824182.7
(22) Date of filing: 09.09.2011
(51) Int. Cl.: B01D 39/16, B01D 39/20, B01D 27/02, B01D 29/21, B01D 61/02, B01D 29/58

(54) **CARTRIDGE FILTER COMBINING A DEPTH FILTER AND A SUB-MICRON FILTER, AND REVERSE OSMOSIS PRE-TREATMENT METHOD**
PATRONENFILTER ALS KOMBINATION AUS EINEM TIEFENFILTER UND EINEM SUBMIKROMETERFILTER SOWIE UMKEHROSMOSE-VORBEHANDLUNGSVERFAHREN
FILTRE CARTOUCHE COMBINANT UN FILTRE EN PROFONDEUR ET UN FILTRE SUBMICRONIQUE, ET MÉTHODE DE PRÉTRAITEMENT POUR OSMOSE INVERSE

(30) Priority: 10.09.2010 US 381708 P
(43) Date of publication of application: 31.07.2013
(73) Proprietor: General Electric Company, Schenectady, NY 12345 (US)
(72) Inventor: STIFTER, Travis Gerald, Minnetonka MN 55343 (US); SZCZEPANSKI, Joseph T., Minnetonka MN 55343 (US); LAIDLAW, William B., Minnetonka MN 55343 (US); BHARWADA, Upen Jayant, Scottsdale AZ 85250 (US); AUNE, Thomas Martin, Minnetonka MN 55343 (US)
(74) Representative: Williams, Andrew Richard
(86) International application number: PCT/US2011/051012
(87) International publication number: WO 2012/034028

(56) References cited:
- EP-A1- 0 475 708
- WO-A1-00/62890
- US-A- 5 681 469
- US-A1- 2003 080 464
- US-A1- 2007 062 887

## Description

This invention relates generally to filtration, and in particular to a cartridge filter combining a depth filter with a second filter comprising fibers with a diameter of less than 1 micron, and to a method of pre-treating feed water before reverse osmosis (RO) according to claims 1 to 9.

The following discussion is not an admission that anything described below is common general knowledge or citable as prior art.

Filters may be designed to remove solids including colloidal particles and microorganisms. Two common types of filters used in filtering liquids are depth filters and pleated filters, which may be surface or screen filters.

A depth filter retains particles throughout the depth of a filtration media. A depth filter may have multiple layers (or zones), with the layer having the largest pore size usually forming an upstream layer adjacent the filter inlet, and the layer having the smallest pore size forming a downstream layer adjacent the filter outlet. A depth filter may be rated according to its dirt holding capacity (DHC), which is measured in grams of solid particles that the filter can hold before plugging. A depth filter may also be rated in terms of the percentage (called efficiency) of particles of a stated minimum size in the feed stream that are retained by the filter. A typical rating efficiency is 90%. However, a depth filter may also be rated for an absolute particle size, which is the size of a particle removed with near 100% efficiency. Various media can be used to construct a depth filter, one of them being a non-woven media of meltblown or spunbond filaments. A depth filter may be provided in the form of a tubular sleeve or a flat sheet.

Pleated filters are made of a thin sheet material. The sheet material is bent into pleats to increase its surface area within a given housing. Pleated filters tend to be surface filters, alternatively called screen filters, which retain particles primarily on or near an upstream surface rather than throughout the depth of the filter. Particles are retained primarily by size exclusion based on the size of pores in, or minimally below, an upstream surface of the filter element. Surface filters are likely to be rated in terms of an absolute particle size. Below the absolute particle size, due to a distribution in the size of specific pores and the possibility of particles being captured in tortuous pores, removal efficiencies decline with particle size and there may be some depth filtration. The media used in a pleated filter may be a non-woven of glass or polymeric fibers or a microporous polymeric membrane.

A cartridge filter is a removable or replaceable filter element designed to be placed in a housing. Some cartridge filters may be cleaned, but they are often discarded at the end of their useful life. The useful life of a filter element is the time the filter element continues to provide its rated removal, while avoiding a maximum pressure drop across the filter and operating at or above a minimum flux or throughput. The maximum pressure drop may be limited by the mechanical ability of a filter element to withstand a differential applied across it. When the filter element either fails to retain particles of a size for which it is rated at the required efficiency, or requires a pressure drop larger than the specified maximum to deliver the minimum specified throughput, it is replaced.

It is generally desirable to provide a filter element that removes small particles with high efficiency and low pressure drop, and has a high holding capacity. It is also generally desirable to provide a cartridge filter having a long service life for a given performance specification. It is also generally desirable to minimize the volume or mass of a filter element required to meet a given performance criteria.

The document US 5 681 469 A describes a depth filter material comprising three annular zones composed of different melt-blown fibers.

United States Patent Number 6,986,427, issued on January 17, 2006 to Aune et al. describes a meltblown non-woven media useful, among other things, for a depth filter element. The media is made by directing a plurality of meltblown filaments at the side of a conical end of a tubular structure. The tubular structure rotates on a spinning mandrel. The tubular structure grows in length as material is added to its conical end while the tubular structure is drawn out of the filament spray area along the length of the mandrel. Different filaments are directed at different portions of the cone, and the filaments may vary in one or more characteristics along the length of the cone. This produces concentric annular zones in the tubular element with a corresponding variation in the one or more characteristics. For example, one or more filaments sprayed only near the tip of the cone form an inner zone of the tube. One or more other meltblown filaments may be applied across the entire length of the cone to add filaments that extend through the depth of the element, crossing multiple zones, to strengthen the media.

Reverse osmosis (RO) membranes may be used to desalinate seawater and for various other applications. The Silt Density Index (SDI) of feed water is a measure of the tendency of a feed water to foul a reverse osmosis membrane. SDI is measured by determining the rate (in percent decay per minute) at which the feed water fouls a specified membrane filter with a nominal 0.45 um pore size when fed at a constant pressure of 206.8 kPa (30 psi). Hollow fiber RO membranes are sometimes said to require feed water with an SDI of 3 or less while spiral wound membranes are sometimes said to require feed waters with an SDI of 5 or less, both of which are much less than the SDI of most seawater supplies. However, further reductions in SDI reduce fouling rates in RO membranes. Kremen et al., in Silt density indices (SDI), percent plugging factor(%PF): their relation to actual foulant deposition (Desalination 119 (1998) 259-262), note that the amount of foulant that accumulates on a membrane increases geometrically as feed water SDI increases from 1 to 5.

The following discussion is intended to introduce the reader to the detailed description to follow and not to limit or define any claimed invention. A claimed invention may be a sub-combination of elements or steps described below, or include an element or step described in other parts of this specification.

Decreasing the SDI of a feed water to low levels, for example 5 or less, generally requires the removal of particles of 1 micron in size and less. A depth filter may be made to remove particles in this size range by using very small diameter filaments and, optionally, compressing them against a mandrel as the depth filter is formed. However, the pressure drop through such a depth filter is significant. Among other things, when the depth filter is in a tubular form, the effective surface area for filtration declines as water moves inwards. Sheet form, included pleated, filters may also be made to remove sub-micron particles. However, the typical process of making such filters involves calendaring the sheet to tighten the pore structure, which again causes significant pressure drop. A very tight sheet form filter also tends to plug rapidly unless the feed water is pre-filtered upstream, which would require an undesirable increase in equipment and piping.

A cartridge filter assembly is described in this specification that includes a depth filter element combined with a downstream second filter element into a single unit that may be used in a standard cartridge filter housing.

The depth filter element has a mass of melt-blown polymer filaments and may have a 90% removal efficiency for a contaminant size in the range of 0.5 to 10 microns, preferably 1 to 5 microns. The depth filter preferably comprises multiple zones occupying different depths of the filter, with one or more melt-blown polymer filaments traversing two or more of the zones. This structure minimizes pressure drop through the filter by reducing the overall density of the filter while retaining adequate compression resistance despite having an inner zone capable of removing small particles.

The second filter element comprises fibers having a diameter of 1 micron or less, which will be called nano-fibers herein. The second filter removes a material percentage of contaminants that are less than 1 micron in size, preferably less than 0.5 microns in size. The use of nano-fibers allows a very small pore to be achieved without calendaring. The resulting pores are also tortuous. The second filter element may be pleated to increase its effective filtration surface area.

The depth filter clement may be in the form of a tube. The second filter element may also be in the form of a tube, preferably pleated, located inside of the depth filter. Caps are sealed to the ends of the depth filter and second filter to form a cartridge filter that may be fit into a standard housing.

The cartridge filter may be used to pre-treat a feed water upstream of an RO membrane. The SDI of the feed water may be reduced to 3 or less or 2 or less. Organic and inorganic contaminants may be removed, which allows the RO membrane to operate longer or at increased flux between chemical cleanings. Producing a filtrate with a very low SDI tends to require a significant mass of contaminants to be retained in the filter. The second filter provides a material removal efficiency for very small particles but accordingly could plug rapidly. The upstream depth filter inhibits larger particles from reaching the second filter, thus increasing the dirt holding capacity of the combined cartridge filter, without requiring a separate pre-filter housing. The depth filter and the second filter are constructed to reduce pressure drop considering the small size of contaminants to be removed and the presence of the other filter.
FIG. 1 is a partially cut-away perspective view of a cartridge filter assembly 10.
FIG. 2 is a partially cut-away perspective view of another cartridge filter assembly 10.
FIG. 3 is a cross-sectional view of the cartridge filter assembly 10 of FIG. 1.
FIG. 4 is a cross-sectional view of the cartridge filter assembly 10 of FIG. 2.

Corresponding reference characters indicate corresponding parts throughout the views of the drawings.

The invention will now be described in the following detailed description with reference to the drawings, wherein one or more embodiments are described in detail to enable practice of the invention. Although the invention is described with reference to specific embodiments, it will be understood that the invention is not limited to these examples and includes numerous alternatives, modifications and equivalents.

Approximating language, as used herein throughout the specification and claims, may be applied to modify any quantitative representation that could permissibly vary without resulting in a change in the basic function to which it is related. Accordingly, a value modified by a term or terms, such as "about", is not limited to the precise value specified. In at least some instances, the approximating language may correspond to the precision of an instrument for measuring the value. Range limitations may be combined and/or interchanged, and such ranges, and all sub-ranges, are included herein unless context or language indicates otherwise. Other than in the operating examples or where otherwise indicated, all numbers or expressions referring to quantities of ingredients, reaction conditions and the like, used in the specification and the claims, are to be understood as modified in all instances by the term "about".

"Optional" or "preferable" and similar terms mean that the subsequently described event or circumstance may or may not occur, or that the subsequently identified material may or may not be present, and that the description includes instances where the event or circumstance occurs or where the material is present, and instances where the event or circumstance does not occur or the material is not present.

As used herein, the terms "comprises," "comprising," "includes," "including," "has," "having" or any other variation thereof, are intended to cover a non-exclusive inclusion. For example, a process, method, article or apparatus that comprises a list of elements is not necessarily limited to only those elements, but may include other elements not expressly listed or inherent to such process, method article or apparatus. The singular forms "a," "an" and "the" include plural referents unless the context clearly dictates otherwise.

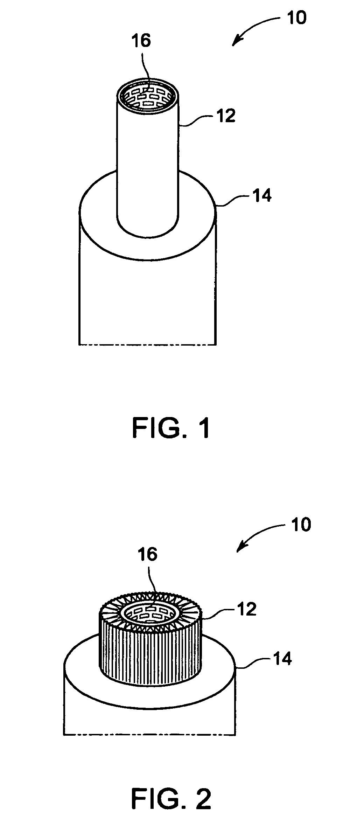

Referring to FIG. 1, a cartridge filter assembly 10 includes a cylindrical inner filter 12 of non-woven materials or membrane materials surrounded by an outer depth filter element 14. The depth filter element 14 forms the exposed outer surface of the cartridge filter assembly 10. The inner filter 12 is a surface or screen filter, and may be supported by a suitable core 16. The cartridge filter assembly 10 having the depth filter element 14 and the inner screen or surface filter inner 12 may be contained within a housing (not shown) provided with a fluid inlet and a fluid outlet. Fluid to be filtered passes sequentially first through the depth filter element 14 and then through the screen or surface inner filter 12, preferably without fluid by-pass. Although the inner filter 12 is described herein as a surface or screen filter, the inner filter 12 can optionally be made of materials that are capable of some depth filtration, or sheet form materials generally, for example materials having a thickness of 5 mm or less, or 2 mm or less.

Preferably, the depth filter element 14 comprises a plurality of media layers or zones each having a different micron retention size as will be explained below so that the permeability or retention (in terms of particle size removed at a given efficiency) of the media layers is largest adjacent a fluid inlet to the cartridge filter assembly 10 and is smallest adjacent the inner filter 12. Thus, large particles will be retained adjacent a feed inlet and progressively smaller particles will be retained as the feed passes through the cartridge filter assembly 10. Although the zones are illustrated with a sharp line between them for ease of illustration, in practice there may be a more gradual transition, or a transitional area, between zones.

The cartridge filter assembly 10 is completed by attaching end caps, as are known in the art, to the inner filter 12 and the depth filter element 14. For example, an end cap may be made of a thermoplastic material and thermally bonded to each end of the filter assembly 10. The ends of both the inner filter 12 and the depth filter element 14 are melted to the end cap to form a seal and bond. One or both of the end caps is open to allow filtrate to be removed from the center of the filter assembly. An open end may be provided with a planar, annular gasket on its face. The gasket may be formed by potting an elastomeric material in a liquid state on the end cap and allowing this material to solidify forming an integral end gasket. The end gasket forms a knife edge seal when pressed against the edge of an outlet of a housing. Alternatively, an end cap may have an inner tubular section fitted with O-ring gaskets to seal against the outer surface of an outlet of a housing. Either gasket provides a mechanical seal separating an inlet to the housing from an outlet of the housing, requiring the feed water to pass through the cartridge filter assembly 10.

The inner filter 12 may be any screen or surface filter of a medium and made in accordance with processes known to one of skill in the art. The inner filter 12 may be made with layers of nano-fibers or a fibrous media containing nano-particles. Nano-fibers, as the term is used in this specification, refers to fibers having a diameter of 1000 nm or less. A nano-particle has at least one dimension that is 1000 nm or less. The nano-fibers used in the inner filter may be in the range of 200-600 nm in diameter, or they may have diameters less than 200 nanometer (0.2 micron), possibly as small as 50 nm in diameter. The nano-fiber layers may form a random distribution of fibers which can be bonded to form an interlocking net. Filtration performance may be obtained as a result of the fine fibers providing a barrier to the passage of particulates. Structural properties such as stiffness, strength and pleatability may be provided by a substrate to which the nano-fibers are adhered. The nano-fibers can be made of a polymer material or a polymer with an additive known to one of skill in the art. Furthermore, the inner filter 12 may be of media made using wet laid or dry laid processes including spun bonding, electrospinning, islands-in-sea processes, fibrillated films, melt blowing, and other processes known to one of skill in the art.

Media in the inner filter 12 can be made of materials that have absorptive properties that have an affinity for microbiological or organic components, or non-organic material such as iron, mercury, and lead that are know to have a detrimental effect on the life of RO membrane elements. Electrostatic charge can also be created by triboelectric effects within nano-fiber mixtures of fibers such as, for example, a mixture of acrylic and nylon fibers. Electrostatic charge can provide enhanced interception of microparticulates via electrokinetic interception. Enhanced interception can also be provided by mechanical interception through tortuous flow paths.

The media of the inner filter 12 may be used in sheet form, or may be molded, folded or otherwise formed into shaped media having a three-dimensional configuration. For example, as shown in FIG. 2, the inner filter 12 may be pleated using known methods and components for pleating. In the illustrated embodiment of FIG. 2, the inner filter 12 comprises one or a plurality of pleated filter sheets optionally supported on a core 16. The pleats can be in a corrugated shape or spirally positioned and can have a loop cross-section or a folded cross-section such as an M-shaped cross-section. As used herein, the terms "pleat", or "pleated" are intended to include all such cross-sectional shapes or positions. The pleated structure provides increased surface area which is initially exposed to fluid exiting from the depth filter element 14 as compared to a flat or curved non-pleated sheet construction.

One example of an inner filter 12 media is a sheet (which may be pleated) from roll stock sold by Ahlstrom Filtration LLC under the Disruptor trade mark, or pleated materials sold under the NanoCeram trade mark by Argonide Corporation. These are the same material and comprise a non-woven mass of glass fibers having diameters under 200 nm. Additional alumina fibers of 2 nm in diameter and under 250 nm in length are attached to the glass fibers. The glass fibers form pores with mechanical removal of 2 or 3 micron size particles but the electrostatic forces created by the alumina fibers allow the media to retain particles less than 1 micron in size. Another example of an inner filter 12 media is a polypropylene non-woven matrix made with 200-400 nm melt-blown fibers by Hollingsworth and Voss. The inner filter 12 preferably removes a material percentage, for example 50% or more, of contaminants that are 1 micron in size or less, preferably 0.5 microns or less.

The outer sleeve 14 comprises a depth filter and is configured to surround the inner filter 12. In one embodiment, the inner filter 12 has an inner diameter of 2.36 cm (0.93 inches) and an outer diameter of 2.51 cm (0.99 inches), and the outer depth filter element 14 has an inner diameter of 2.54 cm (1.00 inches) and an outer diameter of 6.35 cm (2.5 inches). Other dimensions for the inner filter 12 and outer depth element 14 may also be used without departing from the scope of the invention. For example, the inner filter 12 may rest on a supporting tube having an outside diameter of about 2.79 cm (1.1 inch) and extend to an outside diameter of the inner filter of 5.08 cm (2 inches) or more. The depth filter element 14 may have in inner diameter to receive such an inner filter 12 and extend to an outside diameter of about 6.6 cm (2.6 inches) or more, or 11.43 cm (4.5 cm inches) or more, optionally up 15.24 to 17.78 cm to (6 or 7 inches).

The depth filter element 14 may be made of melt blown media having a mass of essentially continuous polymer filaments. The media has a length or longitudinal dimension, a width or latitudinal dimension, and a depth dimension. The primary filaments of the melt blown media are generally oriented in the length (x or longitudinal) and width (y or latitudinal or circumferential in the case of a cylindrical mass) dimensions. Preferably, the media also comprises essentially continuous polymer filaments extending in the depth (z) dimension. In the depth filter element 14, the media allows for the formation of a self supporting interior core zone that concurrently provides a zone of critical filtration. By placing a higher percentage of the bonding filaments (filaments extending in the depth dimension) in the core zone and those zones next to the core, the depth filter element 14 can be engineered to have both higher crush strengths and lower density than if the same amount of bonding filaments were evenly distributed throughout the media. A three-dimensional non-woven media and method of forming the media are disclosed in commonly assigned U.S. Patent No. 6,986,427. Representative polymers useful for forming the depth filter include fibers of polyolefins such as polyethylene or polypropylene, cellulose, cotton, polyamides, polyesters, fiberglass or the like.

The media of the depth filter element 14 desirably uses a fine matrix of primary fibers with reduced fiber to fiber bonding to form a structure with low density. A second source of filaments is concurrently and intentionally placed in the z dimension onto the primary media as they are forming to provide improved fiber to fiber bonding as well as interlocking the mechanical structure. These z filaments thereby form a more rigid porous structure which has significantly greater mechanical strength. The primary media are typically formed in essentially two-dimensional layers with the fibers oriented in the x and y axes and with only incidental bonding between layers. It is beneficial to place the bonding z filaments in the forming layers of primary media fibers and across two or more of the formed primary media layers, with these bonding z filaments essentially oriented in the z-axis with respect to the primary media.

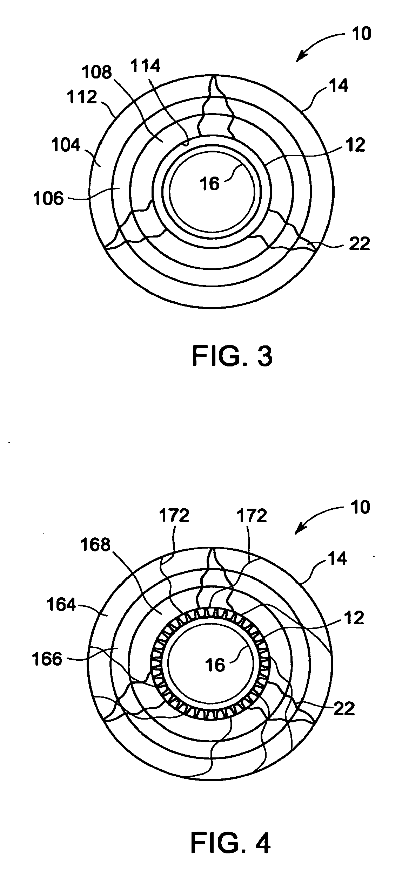

Fibers form a generally two-dimensional mat or layer of material that is continuously formed to build up a filament mass 20 composed of many layers of fibers. These fibers can be described as being laid down in an X-Y plane, or in the longitudinal and circumferential or latitudinal dimensions. As the fibers are built up, layer upon layer, they produce a radial or depth dimension. Turning now to FIG. 3, integrated into the mass 20 is a "z" direction fiber or filament 22, extending radially through the mass 20. Filament mass 20 desirably comprises a plurality of concentric filtration zones 104, 106, and 108. In the illustrated embodiment, three filtration zones 104, 106, and 108 are shown. However, the filament mass 20 may contain more or fewer zones without departing from the scope of the invention. Additional filament mass strength in the radial direction is provided by the z-filaments 22. Z-filaments 22 serve as a fiber structure strengthening elements. Z-filaments 22 extend throughout filament mass 20 and extend in the radial, longitudinal, and circumferential dimensions.

Filtration zones 104, 106, and 108 preferably possess different physical characteristics. For example, filtration zone 104 may comprise relatively smaller diameter filaments; filtration zone 106 may comprise intermediate diameter filaments; and filtration zone 108 may comprise larger diameter filaments. Filtration zones 104, 106, and 108 preferably have filaments having diameters ranging in size from less than about 1 micron to about 100 microns. Z-filaments 22 may have diameters which are equal to, greater than, or less than an average diameter of the filaments of filtration zones 104, 106 and 108. The fibers of zones 104, 106, and 108 may be comprised of different materials, may be of different sizes, or may otherwise have differing properties. For example, the diameters of the fibers in each zone may get progressively larger from core zone 104 to shell zone 108. Each zone may also possess a different density from each adjacent zone. For example, the density of the zones may decrease progressively from core zone 104 to shell zone 108. Filtration zone 104 may have a relatively high density of filaments; filtration zone 106 may have an intermediate density of filaments, and filtration zone 108 may have a lower density of filaments. In another embodiment, filtration zones 104, 106 and 108 may have other variations in density.

It is beneficial to insert the bonding z filaments 22 across the primary media as they are forming, so the bonding z filaments extend across one or more zones 104, 106, and 108 of the primary media. It is beneficial for the bonding z-filaments 22 to extend across all the layers of the primary media, and thereby to traverse from one major surface 112 of the finished primary media to the other major surface 114. In Figures 3 and 4, the z-filament is used as a bonding filament to produce low density primary media that have improved resistance to compression. It is envisioned that the insertion of the bonding z filament across one or more layers of the primary media as they are forming could be used to produce media with other significant benefits. For example, the z polymer could have significantly different physical or chemical characteristics which could result in a significant improvement in the composite media produced.

In one embodiment, the filter sleeve 14 has a thin layer of bonding fibers at one or both surfaces 112, 114 of the forming media to provide a more finished porous surface. The bonding fibers adhere to the primary media fibers at the surface 112, 114 and thereby eliminate loose fibers at the media surface. Another significant benefit discovered is that the bonding fibers adhere to the primary surface fibers and conform to the texture of the surface. The bonding fibers then shrink as they cool, which intensifies the resulting surface roughness. The resulting finished surface was surprisingly found to have about twice the surface area of an unfinished primary media surface. This increased surface area provides a number of benefits, especially useful for particle filtration applications. Doubling the surface area of the shell can allow the shell to have a lower porosity while not causing an excessive pressure drop. Also, as the depth filter element 14 is used, a cake of particles can collect on the shell surface and also cause increased pressure drop. The high surface area permits extended operation before such pressure drop increases are incurred. Also, in a cartridge filter embodiment, the formation of a relatively hard shell avoids the necessity to encapsulate the filter in a support cage after the cartridge filter is produced.

In one embodiment, there is generally an absence of fiber-to-fiber bonding within each of the zones 104, 106, and 108. The primary bonding within filament mass 20 is accomplished by the bonding between "z" direction fibers 22 and the filaments of zones 104, 106, and 108. Selected zones of the media can be made very rigid to provide a filtering layer which also carries the resultant mechanical loads, thereby eliminating the need for separate structural elements in a given filter device.

FIG. 3 illustrates, for one embodiment, approximately the orientation of z-fibers 22. The z-fibers 22 are placed in a continuous manner from the core or bottom zone 104 to the shell or top zone 108 and back to the core zone 104 of mass 20 during approximately 120 degrees or less of rotation during the forming of mass 20. Thus, z-fibers 22 run radially, longitudinally, and circumferentially throughout filter mass 20. In an embodiment where mass 20 is planar rather than cylindrical, z-fiber 22 may be described as extending in the length, width, and thickness dimensions of mass 20. Filter mass 20 is built up and may includes a web of z-fibers 22 which act to hold together fibers from zones 104, 106, and 108 in all three dimensions, thereby lending strength to filament mass 20 and providing tensile support. Because the fibers of mass 20 are held in place in all three directions, bending moments of the fine fibers are minimized, thereby minimizing dirt release and channeling at increased pressure drops. Such undesirable dirt release and channeling would otherwise be expected when using such fine fibers in a low density media.

In one embodiment, the fibers of zones 104, 106, and 108 comprise about 75 to 95 percent of the fibers of filter mass 20, and z-fibers 22 comprise about 5 to 25 percent of the fibers of filter mass 20; more preferably, the fibers of zones 104, 106, and 108 comprise about 80 to 90 percent of the fibers of filter mass 20, and z-fibers 22 comprise about 10 to 20 percent of the fibers of filter mass 20; most preferably, the fibers of zones 104, 106, and 108 comprise about 85 percent of the fibers of filter mass 20, and z-fibers 22 comprise about 15 percent of the fibers of filter mass 20. In one embodiment, a higher percentage of z-fiber 22 is deposited in core zone 104 than in zones 106 and 108. For example, z-fiber 22 may make up about 25% of the total fibers in core zone 104 and about 3% in shell zone 108. This configuration provides added strength to the core region of filter mass 20, which is required to maintain the filter's crush resistance as it is used.

The unique construction of filament mass 20 allows for a high void volume without sacrificing strength by fixing the fibers into an open, yet supported structure. Thus, the filament mass 20 of the present invention displays significantly greater mechanical strength to weight ratios than media of the prior art. Filament mass 20 may be formed to any thickness desired. In one embodiment, filament mass 20 has an inside diameter of about 2.92 cm (1.15 inch) and an outside diameter of about 6.35 cm (2.5 inches). In one embodiment, filament mass 20 has a mass of about 95 grams or less per 25.4 cm (ten inch section) and a crush strength of at least about 2.75 bar (40 psi). A high void volume results in a filament mass 20 with greater dirt holding capacity, longer element life, and lower pressure drop. Moreover, it allows filament mass 20 to be produced faster and with less material, compared with conventional filters. In a preferred embodiment, a ten inch section of filament mass 20 can be produced in about 15 seconds and has a retention rating of 90% at 20 microns. FIG. 4 illustrates an elevation view of a second embodiment of a depth filter element. Similar to the embodiment shown in FIG. 3, filament mass 20 includes first major surface 112 second major surface 114 and concentric filtration zones 164, 166 and 168, with additional filament mass strength in the radial direction provided by z-fibers or filaments 22 and 172. Z-filaments 22 and 172 serve as a strengthening element for fiber mass 20. Z-filaments 22 and 172 extend throughout filament mass 20 and extend in the radial, longitudinal, and circumferential dimensions.

Z-fibers 22 are produced as described with reference to FIG. 3 above. The z-fiber 172 is laid across zones 164, 166, and 168 such that it runs radially, longitudinally, and circumferentially throughout filter mass 127. In the case where mass 127 is planar rather than cylindrical, gluing fiber 172 may be described as extending in the length, width, and thickness dimensions of mass 20. In a preferred embodiment, z-fiber 172 is positioned it transverses one or more zones 164, 166, and 168; however, it need not transverse all zones 164, 166, and 168.

A strong integral filtration core may be produced without significantly increasing the density of the media. This is accomplished by depositing bonding, or z, fibers 22 and 172 onto the primary filtration fibers of zones 164, 166 and 168 during the melt blowing process. The additional heat energy of bonding fibers 22 and 172 allow the highly amorphous polypropylene primary filtration fibers to significantly increase in crystallinity, which, in turn, strengthens the media. Moreover, in one embodiment, one or both of z-fibers 22 and 172 have different material properties than the primary fibers of zones 164, 166 and 168. For example, fibers 22 and/or 172 may be catalysts for reactions or absorbent or adsorbent materials for toxins, viruses, proteins, organics, or heavy metals. In a preferred embodiment, the diameters of structural strengthening fibers or filaments 22 and 172 are comparable to the diameters of the primary filtration fibers in zones 164, 166, and 168 so that the fibers 22 and 172 contribute not only to the strength of filament mass 20, but also to its filtration capabilities.

When used in the cartridge filter assembly 10 to pre-treat water upstream of a reverse osmosis membrane, at least an inner zone 108, 168 of the depth filter element 14 has a 90% removal efficiency for a particle size in the range of 0.5 to 10 microns, preferably in the range of 1 to 5 microns. This removal efficiency is achieved by using filaments for the inner zone having a diameter in the range of about 1 micron to about 20 microns. Larger diameter filaments, up to 400 microns, may be used in outer zones to reduce the pressure drop of the depth filter element 14. Optionally, by adjusting the temperature and flow rate of filaments for the inner zone 108, 168, and optionally applying compression while forming the inner zone 108, 168, the inner zone 108, 168 may be made with a pore size of 3 microns or less, or 1 micron or less such the depth filter element 14 provides absolute removal of 3 micron particles or I micron particles.

Optionally, a filter assembly 10 can be constructed with the depth filter 14 located inside of the inner filter 12. In that case, feed water is fed through one or both end caps to the inside of the filter assembly 10 and filtrate is collected from the housing outside of the filter assembly 10.

Optionally, a supporting layer may be provided between the inner filter 12 and the depth filter element 14. This supporting layer may be made, for example, of a screen rolled into a tube or an extruded mesh stretched into a tubular screen, or an extruded perforated tube. In applications with a high temperature or viscosity, or that are subject to high solids upsets, the additional supporting layer may be useful in reducing pressure applied from the depth filter element 14 on the inner filter 12, which may in turn avoid tearing or crushed pleats in the inner filter 12.

In an experimental trial, a feed water was filtered by a conventional depth filter and by a cartridge filter element combining a depth filter and a surface filter in a side by side test. The feed water was a synthesized mixture of organic, biological and rigid particulate contaminants in water with a measured SDI ranging from 4 to 6. The conventional depth filter had an outside diameter of 6.6 cm (2.6") and was supported on a porous core tube with a 2.79 cm (1.1") inner diameter. The conventional depth filter was capable of removing 10-12 micron particles at 90% efficiency. The combined filter used the same core tube and had a similar outside diameter of about 6.6 cm (2.6"). The combined filter included a graded density depth filter of melt-blown polypropylene with an inner zone having a 90% removal efficiency of 3 micron contaminants, and an outer zone with a 15-20 micron 90% removal. This depth filter had a depth (wall thickness) of 9.17 cm (0.125"). The surface filter was a non-woven sheet of polypropylene (PP) nano-fibers having diameters in the range of 200 to 600 nm, pleated into a tube with a depth of 1.14 cm (0.45"). Both the conventional depth filter and the combined filter had similar total filter depths and were mounted in similar cartridge housings.

The SDI of the filtered water from each filter was measured at various points of time and the results are shown in Table 1 below. The conventional depth filter is called "CDF" and the combined filter is called "CF" in Table 1. As indicated in Table 1, the conventional depth filter had very little effect, if any, on SDI whereas the combined filter reduced SDI to a range that would be beneficial for the operation of downstream RO membranes.

**Table 1**

| Time (minutes) | Feed SDI | CDF Filtrate SDI | CF Filtrate SDI |
|---|---|---|---|
| 0 | 4 | 5 | 1 |
| 120 | 5 | 5 | 1 |
| 300 | 6 | 5 | 2 |
| 540 | 6 | 4 | 1 |

Bacteria were cultured on test panels exposed to the feed and the filtrates. The conventional depth filter showed little, if any, removal of bacteria whereas the filtrate from the combined filter clearly had a reduced concentration of bacteria. It can be expected that the combined filter would therefore reduce bacterial fouling in the membranes.

Based on visual inspection, the depth filter portion of the combined filter had retained about 30%, and the surface filter about 70%, of the contaminants in the feed stream. The depth filter therefore contributed to the removal of SDI and to extending the service life of the surface filter. The feed stream tested had a low SDI representative of only very low fouling natural feed streams or a pre-treated feed stream. When exposed to a natural feed stream with a higher SDI and some larger contaminants, the depth filter can be expected to remove a larger percentage of the contaminants. However, in that case the dirt holding capacity of the depth filter will also be reached sooner. Accordingly, for some feed streams it would be preferable to increase the thickness of the depth filter, for example to 0.5" or 1" or more, to better balance the expected service life of the depth filter and the surface filter.

While the illustrated embodiments are directed to cylindrical cartridge filter assemblies 10 with an outer depth filter element 14, it should be understood that other embodiments are also contemplated. For example, the teachings of the invention may be adapted for flat, sheet, or planar products. Such a flat product may be produced, for example, by cutting the cylindrical cartridge filter along its length to obtain a sheet of material.

## Claims

1. A cartridge filter comprising,
a) a depth filter element (14); and,
b) a downstream second filter element (12),
wherein,
c) the depth filter element (14) comprises a mass of melt-blown polymer filaments and has a 90% removal efficiency for a contaminant size in the range of 0.5 microns to 10 microns; and,
d) the second filter element (12) comprises fibers having a diameter of 1 micron or less, and has a 50% or greater removal efficiency for a contaminant size that is 1 micron or less.

2. The cartridge filter (10) of claim 1, wherein the depth filter element (14) is tubular and the second filter element (12) is located within a bore of the depth filter element.

3. The cartridge filter (10) of claim 2, wherein the second filter element (12) is in the form of a pleated sheet wrapped into a tube.

4. The cartridge filter (10) of claim 3, wherein the depth filter element (14) and the second filter element (12) are sealed at their ends to end caps, at least one of the end caps being adapted to connect to the outlet of a filter housing.

5. The cartridge filter (10) of any of claims 1 to 4, wherein the depth filter element (14) comprises multiple zones (104,106,108) occupying different regions with the depths of the depth filter element, the zones increasing in density or decreasing in filament diameter towards a downstream side of the depth filter element.

6. The cartridge filter (10) of claim 5, comprising one or more melt-blown polymer filaments (22) traversing two or more of the zones (104,106,108).

7. The cartridge filter (10) of any of claims 1 to 6, wherein the depth filter element (14) has a 90% removal efficiency for a contaminant size in the range of 1 microns to 5 microns.

8. The cartridge filter (10) of any of claims 1 to 7, wherein the second filter element (12) comprises fibers or particles having a diameter of 0.5 microns or less, and has a 50% or greater removal efficiency for a contaminant size that is 0.5 microns or less.

9. A process for treating a feed water comprising the steps of,
a) filtering the feed water with a cartridge filter (10) according to any of claims 1 to 8 to produce a filtrate; and,
b) filtering the filtrate with a reverse osmosis membrane.

## Patentansprüche

1. Patronenfilter, umfassend,
a) ein Tiefenfilterelement (14); und
b) ein stromabwärts liegendes zweites Filterelement (12),
wobei
c) das Tiefenfilterelement (14) eine Masse an schmelzgeblasenen Polymerfilamenten umfasst und eine 90 %ige Entfernungswirksamkeit bei einer Schadstoffgröße in der Größenordnung von 0,5 Mikron bis 10 Mikron aufweist; und
d) das zweite Filterelement (12) Fasern mit einem Durchmesser von 1 Mikron oder weniger umfasst, und eine Entfernungswirksamkeit von 50 % oder mehr bei einer Schadstoffgröße aufweist, die 1 Mikron oder weniger beträgt.

2. Patronenfilter (10) nach Anspruch 1, wobei das Tiefenfilterelement (14) röhrenförmig ist und das zweite Filterelement (12) innerhalb einer Bohrung des Tiefenfilterelements liegt.

3. Patronenfilter (10) nach Anspruch 2, wobei das zweite Filterelement (12) in Form eines gefalteten Blattes vorliegt, das zu einem Rohr gewickelt ist.

4. Patronenfilter (10) nach Anspruch 3, wobei das Tiefenfilterelement (14) und das zweite Filterelement (12) an ihren Enden mit Endkappen abgedichtet sind, wobei mindestens eine der Endkappen dazu eingerichtet ist, mit dem Auslass eines Filtergehäuses verbunden zu werden.

5. Patronenfilter (10) nach einem der Ansprüche 1 bis 4, wobei das Tiefenfilterelement (14) mehrere Zonen (104, 106, 108) umfasst, die unterschiedliche Regionen mit den Tiefen des Tiefenfilterelementes belegen, wobei die Dichte der Zonen zunimmt oder der Filamentdurchmesser zu der stromabwärts liegenden Seite des Tiefenfilterelementes abnimmt.

6. Patronenfilter (10) nach Anspruch 5, umfassend ein oder mehrere schmelzgeblasene/s Polymerfilament/e (22), die zwei oder mehr der Zonen (104, 106, 108) durchqueren.

7. Patronenfilter (10) nach einem der Ansprüche 1 bis 6, wobei das Tiefenfilterelement (14) eine 90 %ige Entfernungswirksamkeit bei einer Schadstoffgröße in der Größenordnung von 1 Mikron bis 5 Mikron aufweist.

8. Patronenfilter (10) nach einem der Ansprüche 1 bis 7, wobei das zweite Filterelement (12) Fasern mit einem Durchmesser von 0,5 Mikron oder weniger umfasst und eine Entfernungswirksamkeit von 50 % oder mehr bei einer Schadstoffgröße aufweist, die 0,5 Mikron oder weniger beträgt.

9. Verfahren zum Behandeln von Zulaufwasser, die folgenden Schritte umfassend
a) Filtern des Zulaufwassers mit einem Patronenfilter (10) nach einem der Ansprüche 1 bis 8, um ein Filtrat herzustellen; und
b) Filtern des Filtrats mit einer Umkehrosmosemembran.

## Revendications

1. Filtre à cartouche comprenant :
a) un élément de filtre en profondeur (14) ; et
b) un second élément de filtre aval (12),
dans lequel :
c) l'élément de filtre en profondeur (14) comprend une masse de filaments de polymère soufflé en fusion et présente un rendement d'élimination à 90 % pour une taille de contaminant se situant dans la plage de 0,5 à 10 micromètres ; et
d) le second élément de filtre (12) comprend des fibres ayant un diamètre de 1 micromètre ou moins et présente un rendement d'élimination de 50 % ou plus pour une taille de contaminant qui est de 1 micromètre ou moins.

2. Filtre à cartouche (10) selon la revendication 1, dans lequel l'élément de filtre en profondeur (14) est tubulaire et le second élément de filtre (12) est situé dans un alésage de l'élément de filtre en profondeur.

3. Filtre à cartouche (10) selon la revendication 2, dans lequel le second élément de filtre (12) se présente sous la forme d'une feuille plissée emballée dans un tube.

4. Filtre à cartouche (10) selon la revendication 3, dans lequel l'élément de filtre en profondeur (14) et le second élément de filtre (12) sont scellés à leurs extrémités à des chapeaux terminaux, au moins l'un des chapeaux terminaux étant à même de se raccorder à la sortie d'un boîtier de filtre.

5. Filtre à cartouche (10) selon l'une quelconque des revendications 1 à 4, dans lequel l'élément de filtre en profondeur (14) comprend de multiples zones (104, 106, 108) occupant différentes régions avec les profondeurs de l'élément de filtre en profondeur, les zones augmentant en densité ou diminuant en diamètre de filament vers un côté aval de l'élément de filtre en profondeur.

6. Filtre à cartouche (10) selon la revendication 5, comprenant un ou plusieurs filaments de polymère soufflé en fusion (22) traversant deux ou plus des zones (104, 106, 108).

7. Filtre à cartouche (10) selon l'une quelconque des revendications 1 à 6, dans lequel l'élément de filtre en profondeur (14) a un rendement d'élimination de 90 % pour une taille de contaminant dans la plage de 1 à 5 micromètres.

8. Filtre à cartouche (10) selon l'une quelconque des revendications 1 à 7, dans lequel le second élément de filtre (12) comprend des fibres ou des particules ayant un diamètre de 0,5 micromètre ou moins et a un rendement d'élimination de 50 % ou plus pour une taille de contaminant qui est de 0,5 micromètre ou moins.

9. Procédé de traitement d'une eau d'alimentation comprenant les étapes consistant à :
a) filtrer l'eau d'alimentation avec un filtre à cartouche (10) selon l'une quelconque des revendications 1 à 8 pour produire un filtrat ; et
b) filtrer le filtrat avec une membrane à osmose inverse.
